(19) Europäisches Patentamt
European Patent Office
Office européen des brevets

(11) **EP 4 485 023 A1**

(12) **EUROPEAN PATENT APPLICATION**

(43) Date of publication:
**01.01.2025 Bulletin 2025/01**

(21) Application number: **24183566.9**

(22) Date of filing: **20.06.2024**

(51) International Patent Classification (IPC):
***G02B 6/036*** *(2006.01)*

(52) Cooperative Patent Classification (CPC):
**G02B 6/03627; G02B 6/02004; G02B 6/02395;**
G02B 6/0281; G02B 6/03611; G02B 6/4403

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **29.06.2023 IN 202311043713**

(71) Applicant: **Sterlite Technologies Limited**
**Gurugram, Haryana 122102 (IN)**

(72) Inventors:
• **MALVIYA, Apeksha**
**122102 Gurugram (IN)**

• **BALAKRISHNAN, Janarthanan**
**122102 Gurugram (IN)**
• **GUPTA, Priya**
**122102 Gurugram (IN)**
• **KUMAR, Shubham**
**122102 Gurugram (IN)**
• **MUNIGE, Srinivas Reddy**
**122102 Gurugram (IN)**
• **PANDEY, Anand**
**122102 Gurugram (IN)**

(74) Representative: **Valet Patent Services Limited**
**c/o Caya 83713X**
**Am Börstig 5**
**96052 Bamberg (DE)**

(54) **OPTICAL FIBER AND OPTICAL FIBER CABLE**

(57) The present disclosure relates to an optical fiber 100 having a core (102) which is up doped and a cladding (104) surrounding the core (102). Particularly, the cladding (104) has a first cladding (104a) defined by a first relative refractive index difference ($\Delta 1$). Moreover, the first cladding (104a) is a continuous region adjacent to the core (102) such that a relative refractive index profile of the first cladding (104a) is an alpha profile. Further, the optical fiber (100) has mode field diameter in the range of 8.2 micrometer ($\mu$m) to 9.0 $\mu$m at a wavelength of 1310 nanometer (nm), and a cut-off wavelength less than or equal to 1260 nm.

**FIG. 1**

EP 4 485 023 A1

**Description**

**TECHNICAL FIELD**

Embodiments of the present disclosure relate to the field of telecommunication fiber, and more particularly, relates to an optical fiber and an optical fiber cable.

This application claims the benefit of Indian Application No. "202311043713" titled "OPTICAL FIBER AND OPTICAL FIBER CABLE" filed by the applicant on June 29, 2023, which is incorporated herein by reference in its entirety.

**Background Art**

Optical fibers are widely used to transmit information or data in the form of light from one place to another. The optical fibers are disposed within the optical fiber cable. Fiber optic cables include one or more optical fibers or other optical waveguides that conduct optical signals, for example carrying voice, data, video, or other information

Increasing demand of high-speed optical fiber communication has subsequently increased the density of optical fiber networks, which has led to a larger problem of accommodation of the optical fiber cables. Attenuation of optical signals and microbending losses in the optical fibers have a huge impact on the range and quality of optical signals communicated in the network.

International Telecommunication Union (ITU) is a standards-setting organization that publishes recommendations that are, for all practical purposes, accepted as standards for various industries. The Telecommunication Standardization Sector of the ITU (ITU-T) publishes standards for transmission systems and media, digital systems, and networks, which it designates as Series G. Of these, ITU-T G.657 has been widely accepted as the standard for transmission media and optical systems characteristics for optical fiber cables. ITU-T G.657 sets forth detailed performance characteristics of a bending-loss insensitive single-mode optical fiber and cable (available at https://www.itu.int/rec/T-REC- G.657/en and incorporated by reference in its entirety as if expressly set forth herein), with subcategories ITU-T G.657.A1 and ITU-T G.657.A2 providing recommendations for fibers with a minimum macro-bend design radius of ten millimeters (10mm) and 7.5mm, respectively. Insofar as those having skill in the art fully understand the ITU-T G.657 standards.

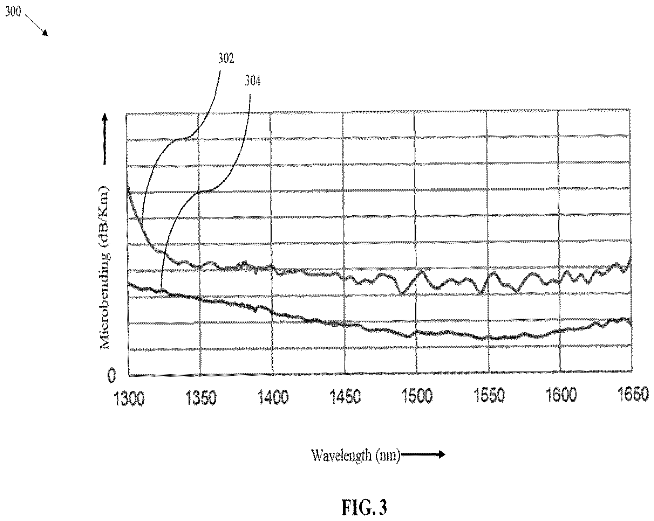

The existing ITU-T G.657.A2 compliant optical fibers with RI profile having a buffer clad region between a core region and a trench region fail to provide enhanced optical properties to reduce bending losses. Further, the buffer region increases the manufacturing cost and makes the fiber manufacturing process tedious and time-consuming. A variation in micro-bending loss (in decibel per kilometer) with respect to a variation in wavelength (in nanometer) for known G.657.A2 optical fibers is illustrated in FIG. 3 as 302.

Prior art reference "WO2023009103A1" discloses an optical fiber with a relative refractive index (RRI) profile having a triangular or trapezoidal shaped trench which is difficult to manufacture. A variation in refractive index due to such trench shape is very difficult to control practically.

Another prior art reference "US1150683582" discloses an optical fiber that exhibits low macro-bend loss at 1550 nm at bend diameters greater than 40 mm. The RRI profile of the optical fiber includes a trench cladding region such that the volume of the trench is controlled to minimize macro-bend loss at large bend diameters.

The persistent challenges of accommodating optical fiber cables in high-density networks while mitigating attenuation and micro-bending losses have created a long-felt need within the industry.

Existing solutions, as exemplified by the G.657.A2 compliant fibers and prior art references, fall short in providing an optimal balance between cost-effectiveness, ease of manufacturing, reduced diameter, and ultra-low bend losses.

The presence of the buffer region not only increases manufacturing costs but also complicates the fiber manufacturing process. Additionally, prior art references, such as WO2023009103A1 and US1 1506835B2, present challenges in practical manufacturing due to difficult-to-control triangular or trapezoidal trench shapes.

Existing solutions, such as those compliant with ITU-T G.657.A2, fail to provide enhanced optical properties and introduce complexities in manufacturing, notably with increased costs and time-consuming processes. The known G.657.A2 compliant optical fibers with a buffer-clad region between the core and trench region are unable to provide the desired optical properties for reducing bending losses effectively.

There is a critical need to overcome these limitations and evident for an optical fiber that is cost-effective, easy to manufacture, has reduced diameter, and offers ultra-low bend losses with optimized mode field diameter (MFD) values.

Various optical fiber profiles exist, which accommodate the bend-insensitivity requirements under the ITU-T standards, and there are ongoing efforts to improve optical fiber performance and manufacturing processes for optical fibers that meet, or exceed, the ITU-T G.657 standards. Therefore there is a need to develop an optical fiber that is inexpensive, easy to manufacture, reduced in diameter, and provides ultra-low bend losses as well as optimized mode field diameter (MFD) values.

## SUMMARY OF THE DISCLOSURE

Embodiments of the present disclosure relates to an optical fiber characterized in that a core that is up doped and a cladding surrounding the core. The cladding further comprises a first cladding defined by a first relative refractive index difference ($\Delta 1$). In particular, the first cladding is a continuous region adjacent to the core such that a relative refractive index profile of the first cladding is an alpha profile. Further, the continuous region is defined as a region not having one or more pure silica region between the core and the first cladding. Furthermore, the mode field diameter of the optical fiber is in a range of 8.2 micrometer ($\mu$m) to 9.0 $\mu$m at a wavelength of 1310 nanometer (nm), and a cable cut-off wavelength of the optical fiber is less than or equal to 1260 nm.

According to the first aspect of the present disclosure, the first alpha value of the first cladding is in a range of 1.5 to 4.

According to the second aspect of the present disclosure, the first cladding comprises a suppressed region having a minimum relative refractive index difference at a radius in a range of 13 $\mu$m to 15 $\mu$m. Further, the first cladding comprises a trench having a trench volume in a range of 14 to 20 percent micrometer square (% $\mu$m$^2$).

According to the third aspect of the present disclosure, a ratio of the trench volume to a core volume of the core is in a range of 2 to 3.5. In particular, the thickness of the first cladding is in the range of 12 $\mu$m to 14 $\mu$m. Moreover, the cladding further comprising a second cladding surrounding the first cladding and is defined by a second relative refractive index difference ($\Delta 2$), where the first relative refractive index difference ($\Delta 1$) is less than the second relative refractive index difference ($\Delta 2$).

According to the fourth aspect of the present disclosure, a first relative refractive index difference ($\Delta 1$) of the first cladding is in a range of -0.15% to -0.25%.

According to the fifth aspect of the present disclosure, the optical fiber is coated with at least one of,

(i) a primary coating that surrounds the cladding, a secondary coating that surrounds the primary coating, and a colored coating that surrounds the secondary coating,
(ii) a primary coating that surrounds the cladding and a secondary-colored coating that surrounds the primary coating, and
(iii) a primary-colored coating that surrounds the cladding .

According to the sixth aspect of the present disclosure, a glass diameter of the optical fiber is in a range of 80 $\mu$m 125 $\mu$m.

According to the seventh aspect of the present disclosure, the optical fiber (100) has at least one of,

(i) a micro bend loss of less than 0.5 decibel per kilometer (dB/Km) at a wavelength of 1550 nm,
(ii) an attenuation of less than or equal to 0.35 dB/Km at a wavelength of 1310 nm,
(iii) an attenuation of less than or equal to 0.35 dB/Km at a wavelength of 1383 nm,
(iv) an attenuation of less than or equal to 0.2 dB/Km at a wavelength of 1550 nm, and (v) an attenuation of less than or equal to 0.23 dB/Km at a wavelength of 1625 nm.

According to the eighth aspect of the present disclosure, the macro bend loss of the optical fiber is

(i) 0.2 dB/turn at a bend radius of 7.5 mm and a wavelength of 1550 nm, and
(ii) 0.5 dB/turn at a bend radius of 7.5 mm and a wavelength of 1625 nm.

The foregoing objectives of the present disclosure are attained by providing an optical fibre and an optical fiber cable.

## BRIEF DESCRIPTION OF DRAWINGS

To describe the technical solutions in the embodiments of the present disclosure or in the prior art more clearly, the following briefly describes the accompanying drawings required for describing the embodiments or the prior art. Apparently, the accompanying drawings in the following description merely show some embodiments of the present disclosure, and a person of ordinary skill in the art can derive other implementations from these accompanying drawings without creative efforts. All of the embodiments or the implementations shall fall within the protection scope of the present disclosure.

Fig. 1 is a pictorial snapshot illustrating a cross sectional view of an optical fiber in accordance with an embodiment of the present disclosure;

Fig. 2 is a pictorial snapshot illustrating a refractive index profile of the optical fiber cable in accordance with an embodiment of the present disclosure;

Fig. 3 is a pictorial snapshot illustrating a graph representing a comparison of micro-bending loss with respect to wavelength of the optical fiber with G.657.A2 (prior art) in accordance with an embodiment of the present disclosure;

Fig.4 is a pictorial snapshot illustrating an optical fiber cable in accordance with an embodiment of the present disclosure.

The optical fiber cable is illustrated in the accompanying drawings, which like reference letters indicate corresponding parts in the various figures. It should be noted that the accompanying figure is intended to present illustrations of exemplary embodiments of the present disclosure. This figure is not intended to limit the scope of the present disclosure. It should also be noted that the accompanying figure is not necessarily drawn to scale.

## DESCRIPTION OF EMBODIMENTS

Those skilled in the art will be aware that the present disclosure is subject to variations and modifications other than those specifically described. It is to be understood that the present disclosure includes all such variations and modifications. The disclosure also includes all such steps, features, compositions and compounds referred to or indicated in this specification, individually or collectively, and any and all combinations of any or more of such steps or features.

Definitions:

For convenience, before further description of the present disclosure, certain terms employed in the specification, and examples are collected here. These definitions should be read in the light of the remainder of the disclosure and understood as by a person of skill in the art. The terms used herein have the meanings recognized and known to those of skill in the art, however, for convenience and completeness, particular terms and their meanings are set forth below.

The articles "a", "an" and "the" are used to refer to one or to more than one (i.e., to at least one) of the grammatical object of the article.

The terms "comprise" and "comprising" are used in the inclusive, open sense, meaning that additional elements may be included. It is not intended to be construed as "consists of only". Throughout this specification, unless the context requires otherwise the word "comprise", and variations such as "comprises" and "comprising", will be understood to imply the inclusion of a stated element or step or group of element or steps but not the exclusion of any other element or step or group of element or steps.

**The following brief definition of terms shall apply throughout the present disclosure:**
The term "sheath" as used herein is referred to as an outermost layer or an outermost layer of the optical fiber cable that holds and protects the contents of the optical fiber cable.

The term "strength member" as used herein is referred to as a cable element made up of filaments or yarns that provides strength to the optical fiber cable.

The term "ribbon bundle" as used herein is referred to as a bundle of optical fiber ribbons.

The term "intermittently bonded fiber (IBR)" as used herein refers to an optical fiber ribbon having a plurality of optical fibers such that the plurality of optical fibers is intermittently bonded to each other by a plurality of bonded portions that are placed along the length of the plurality of optical fibers. The plurality of bonded portions is separated by a plurality of unbonded portions. An intermittently bonded ribbon fiber cable consists of fibers bonded using matrix material. As such, they lack a flat structure. The rollable ribbons in an intermittently bonded ribbon fiber are bundled together and have the appearance of a spider's web. Hence, they are also called spider web ribbon fiber. Due to their loose fiber bundling, intermittently bonded ribbon cables are perfect for making optic fiber cables with higher packing density.

The term "core" as used herein refers to an inner most cylindrical structure present in the center of the optical fiber, that is configured to guide the light rays inside the optical fiber.

The term "cladding" as used herein refers to one or more layered structure covering the core of an optical fiber from the outside, that is configured to possess a lower refractive index than the refractive index of the core to facilitate total internal reflection of light rays inside the optical fiber. Further, the cladding of the optical fiber may include an inner cladding layer coupled to the outer surface of the core of the optical fiber and an outer cladding layer coupled to the inner cladding from the outside.

The term "trench" as used herein is referred to as a down-doped region with a higher down dopant concentration to decrease the refractive index of the down doped region with respect to pure silica and increase the relative refractive index of the core.

The term "refractive index" as used herein is referred to as the measure of change of speed of light from one medium to another and is particularly measured in reference to speed of light in vacuum. More specifically, the refractive index facilitates measurement of bending of light from one medium to another medium.

The term "relative refractive index difference" as used herein is referred to as a measure of the relative difference in refractive index between two optical materials. As used herein, the relative refractive index difference is represented by Δ and its values are given in units of "%", unless otherwise specified. In some cases where the refractive index of a region is less than the average refractive index of an undoped region, the relative refractive index percentage is negative, and the region is referred as a trench region.

The term "reduced diameter optical fiber" as used herein is referred to as an optical fiber as disclosed in the present disclosure having a diameter range of 60 micrometers (μm) to 125 μm with a tolerance of + 0.7 μm. Such optical fibers have very less peripheral clad thickness. The reduced diameter optical fiber significantly increases the packing density of the optical fiber cables.

The term "refractive index profile" (also termed as relative refractive index profile Δ(r)) of the optical fiber as used herein is referred to as a distribution of refractive indexes in the optical fiber from the core to the outmost cladding layer of the optical fiber. Based on the refractive index profile, the optical fiber may be configured as a step index fiber. The refractive index of the core of the optical fiber is constant throughout the fiber and is higher than the refractive index of the cladding. Further, the optical fiber may be configured as a graded index fiber, wherein the refractive index of the core gradually varies as a function of the radial distance from the center of the core.

The term "down doped" as used herein is referred to as addition of doping materials to facilitate decrease in the refractive index of a particular layer or part of optical fiber. The materials configured to facilitate down-doping are known as down-dopants. Specifically, at least one down dopant as used herein is Fluorine.

The term "Up doped" as used herein is referred to as addition of doping materials to facilitate increase in the refractive index of a particular layer or part of optical fiber. The materials configured to facilitate up-doping are known as up-dopants. Specifically, the up dopant as used herein is one of Germanium and Chlorine.

The term "un doped" as used herein is referred to as a material that is not intentionally doped, or which is pure silica. However, there are always chances of some diffusion of dopants in the region which is negligible.

The term "core volume" as used herein is defined as a volume acquired by the core with respect to the core radius Rcore. The core volume may have a magnitude in micrometers square ($\mu m^2$) that may be determined by the following equation: =

wherein Rcore is radius of core.

The term "trench volume" as used herein is referred to as a volume (surface integral volume) acquired by region between the core radius 'Rcore' and the trench radius 'R1' may have a trench volume with a magnitude in $\mu m^2$ that may be determined by the following equation: =

wherein Rcore is radius of core,
R1 is the trench radius.

The term "Mode Field Diameter (MFD)" as used herein is referred to as the size of the light-carrying portion of the optical fiber. For single-mode optical fibers, this region includes the optical fiber core as well as a small portion of the surrounding cladding glass of the optical fiber. The selection of desired MFD helps to describe the size of the light-carrying portion of the optical fiber.

The term "macro bend loss" as used herein is referred to as the losses induced in bends around mandrels (or corners in installations), generally more at the cable level or for fibers. The macro bend loss occurs when the fiber cable is subjected to a significant amount of bending above a critical value of curvature. The macro bend loss is also called as large radius loss.

The term "micro bend loss" as used herein is referred to as a loss in an optical fiber that relates to a light signal loss associated with lateral stresses along a length of the optical fiber. The micro bend loss is due to coupling from the optical fiber's guided fundamental mode to lossy modes or cladding modes.

The term "Zero Dispersion Wavelength (ZDW)" as used herein is referred to as a wavelength at which the value of a dispersion coefficient is zero. In general, ZDW is the wavelength at which material dispersion and waveguide dispersion cancel one another.

The term "attenuation" as used herein is referred to as reduction in power of a light signal as it is transmitted. Specifically, the attenuation is caused by Rayleigh scattering, absorption of the light signal, and the like.

The term "cable cut-off wavelength" as used herein refers to a wavelength above which a single-mode fiber will support and propagate only one mode of light. The optical fiber transmits a single mode of optical signal above a pre-defined cut-off wavelength known as cable cut-off wavelength measured on 22 meters sample length of the optical fiber.

The term "core peak" as used herein is referred to as the maximum refractive index value of the core of the optical fiber.

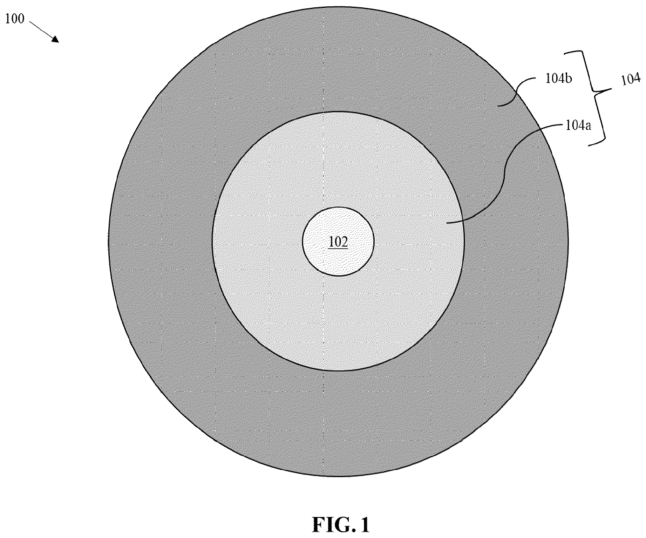

Fig. 1 is a pictorial snapshot illustrating a cross sectional view of an optical fiber in accordance with an embodiment of the present disclosure. In particular, the optical fiber 100 may have a mode field diameter in a range of 8.2 micrometer ($\mu$m) to 9.0 $\mu$m at a wavelength of 1310 nanometer (nm), a cut-off wavelength of the optical fiber 100 less than or equal to 1260 nm.

In some aspects of the present disclosure, a glass diameter of the optical fiber 100 without coating (i.e., a bare optical fiber) may be in a range of 80 $\mu$m to 125 $\mu$m with a tolerance of $\pm$ 0.7 $\mu$m. Further, the optical fiber 100 may have a bare fiber diameter of less than or equal to 125 $\mu$m with a deviation of 0.7 $\mu$m.

In accordance with an embodiment of the present disclosure, the optical fiber 100 may have at least one of, a micro bend loss of less than 0.5 decibel per kilometer (dB/Km) at a wavelength of 1550 nm, an attenuation of less than or equal to 0.35 dB/Km at a wavelength of 1310 nm, an attenuation of less than or equal to 0.35 dB/Km at a wavelength of 1383 nm, an attenuation of less than or equal to 0.2 dB/Km at a wavelength of 1550 nm, and an attenuation of less than or equal to 0.23 dB/Km at a wavelength of 1625 nm.

In accordance with an embodiment of the present disclosure, the optical fiber 100 may have a macro bend loss of 0.2 dB/turn at a bend radius of 7.5 mm and a wavelength of 1550 nm. Alternatively, the optical fiber 100 may have a macro bend loss of 0.5 dB/turn at a bend radius of 7.5 mm and a wavelength of 1625 nm.

In accordance with an embodiment of the present disclosure, the optical fiber 100 may be coated with at least one of, a first set of coatings, a second set of coatings, and a third set of coatings. In particular, the first set of coatings may have a primary coating (not shown) may surround the cladding 104, the secondary coating (not shown) may surround the primary coating, and the colored coating (not shown) may surround the secondary coating. Moreover, the second set of coatings may have a primary coating (not shown) surrounding the cladding 104, and the secondary-colored coating (not shown) surrounding the primary coating and the third set of coatings may have a primary-colored coating (not shown) surrounding the cladding 104.

In accordance with another embodiment of the present disclosure, the optical fiber 100 may be coated with the primary coating, the secondary coating, and the colored coating.

In accordance with an embodiment of the present disclosure, coating thickness of the primary coating may be in a range of 10 $\mu$m to 30 $\mu$m. The coating thickness of the secondary coating may be in a range of 10 $\mu$m to 30 $\mu$m. Further, the coating thickness of the colored coating may be in a range of 4 $\mu$m to 8 $\mu$m.

In accordance with an embodiment of the present disclosure, a young's modulus of the primary coating may be less than 0.6 Megapascals (MPa). Moreover, young's modulus of the secondary coating may be less than 1500 MPa. Further, the young's modulus of the secondary coating may be in a range of 1200 MPa to 1500 MPa.

In accordance with an embodiment of the present disclosure, the optical fiber 100 may be coated with at least one coating layer with a thickness of less than 60 $\mu$m. The diameter of the optical fiber 100 coated by at least one coating layer may be in a range of 125 $\mu$m to 180 $\mu$m.

Alternatively, the diameter of the optical fiber 100 coated by at least one coating layer may be in a range of 160 $\mu$m to 200 $\mu$m. In other alternative aspects of the present disclosure, the diameter of the optical fiber 100 coated by at least one coating layer may be less than 250 $\mu$m.

In accordance with an embodiment of the present disclosure, the optical fiber 100 may have a core 102, up doped with one of Germanium (Ge) and/or Chlorine (Cl), a cladding 104 surrounding the core 102. In particular, the refractive index profile of the core 102 may be an alpha profile such that a core refractive index 'n1' may be derived from a core alpha value 'ac' corresponding to a peak shaping parameter alpha 'a'. The peak shaping parameter 'a' may be defined as how refractive index changes as a function of radius.

Further, the cladding 104 may have a first cladding 104a defined by a first relative refractive index difference '$\Delta$1'. In particular, the first cladding 104a may be down-doped. The first cladding 104a (hereinafter interchangeably referred to and designated as "the down-doped region 104a") may be a continuous region adjacent to the core 102 such that a relative refractive index profile of the first cladding 104a may be an alpha profile such that a first cladding refractive index 'n2' may be derived from a first alpha value 'a1' of the peak shaping parameter 'a'. The peak shaping parameter 'a' may be defined as how the refractive index changes as a function of radius.

In accordance with an embodiment of the present disclosure, the core alpha value 'ac' of the core 102 may be in a range of 3 to 8, and the first alpha value 'a1' of the first cladding 104a may be in a range of 1.5 to 4.

In accordance with an embodiment of the present disclosure,, the optical fiber 100 may be independent of one or more pure silica regions formed between core region and a down doped region or trench region of an optical fiber. the pure silica region (*i.e.*, buffer clad region) increases the manufacturing cost and makes the fiber manufacturing process tedious and time taking.

In some aspects of the present disclosure, the optical fiber 100 may not comprise any pure silica region or undoped region adjacent to the core 102 that makes the manufacturing of optical fiber 100 less complex and achieves the required waveguide properties. In some aspects of the present disclosure, the optical fiber 100 may not comprise any pure silica region or undoped region adjacent to the core 102 that may provide better control over required optical parameters of the optical fiber.

In accordance with an embodiment of the present disclosure, the cladding 104 may further have a second cladding 104b surrounding the first cladding 104a. In particular, the second cladding 104b may be defined by a second relative refractive index difference 'Δ2'. The first relative refractive index difference 'Δ1' may be less than the second relative refractive index difference 'Δ2'.

Further, the second cladding 104b may be undoped. And, the second cladding 104b may have a second cladding refractive index 'n3'. In some aspects of the present disclosure, the second cladding refractive index 'n3' may be equal to a refractive index of pure silica '$n_{silica}$' with a deviation of ±0.0001

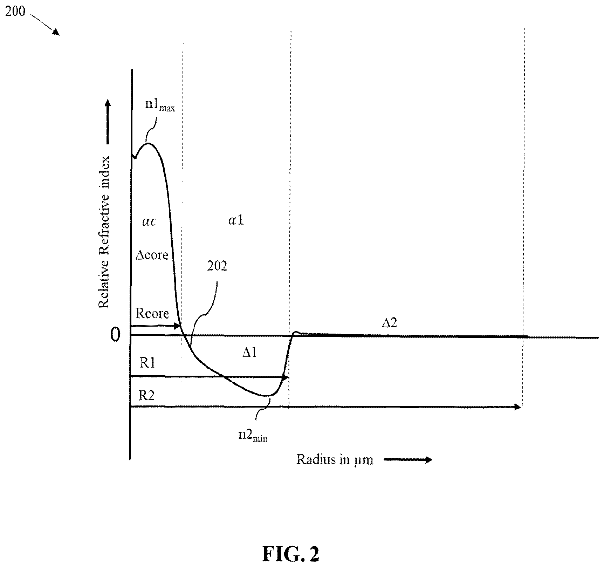

Fig. 2 is a pictorial snapshot illustrating a refractive index profile of the optical fiber cable in accordance with an embodiment of the present disclosure. The core 102 may have a core radius 'Rcore', the first cladding 104a with a first cladding radius 'R1', and the second cladding 104b with second cladding radius 'R2'. In some aspects of the present disclosure, the core 102 may be up doped. And, the core 102 may have the core relative refractive index difference 'Δcore'. In particular, the core relative refractive index difference 'Δcore' may be derived from the core refractive index 'n1'. Moreover, the core relative refractive index difference 'Δcore' of the core 102 may be in a range of 0.55 percent (%) to 0.65%. In an exemplary aspect of the present disclosure, the core relative refractive index difference 'Δcore' can be determined as:

$$\Delta core = (n1 - n_{silica}) * 100 \, (\%),$$

where $n_{silica}$ is the refractive index of pure silica.

In accordance with an embodiment of the present disclosure, the relative refractive index profile of the core 102 may be the alpha profile such that the core refractive index 'n1' may be derived from the core alpha value 'ac' of the peak shaping parameter 'a'. Further, the core alpha value 'ac' of the core 102 may be in a range of 3 to 8.

In accordance with an embodiment of the present disclosure, the core refractive index 'n1' may be dependent on a core peak with a maximum refractive index value '$n1_{max}$' (*i.e.*, a maximum value of the core refractive index 'n1'), the core radius 'Rcore', the core relative refractive index difference 'Δcore', and a radial position 'r' from a center of the optical fiber 100.

In an exemplary aspect of the present disclosure, the core refractive index 'n1' at the radial distance 'r' can be determined as:

$$n1(r) = n1_{max} \left( 1 - 2\Delta core \left( \frac{r}{Rcore} \right)^{\alpha c} \right)^{1/2}$$

In some aspects of the present disclosure, the first cladding 104a may be down doped and have the first relative refractive index difference 'Δ1'. In particular, the first relative refractive index difference 'Δ1' may be derived from the first cladding refractive index 'n2'. Moreover, the first relative refractive index difference 'Δ1' of the first cladding 104 may be in a range of -0.15% to -0.25%. Further, the first relative refractive index difference 'Δ1' can be determined as: Δ1 = (n2 - $n_{silica}$) *100 (%), where $n_{silica}$ is the refractive index of pure silica.

In accordance with an embodiment of the present disclosure, the first cladding 104a may have a suppressed region 202 (hereinafter interchangeably referred to and designated as a trench 202). In particular, the first cladding radius 'R1' may be in a range of 16 μm to 18 μm. Moreover, the thickness of the first cladding 104a is in range of 12 μm to 14 μm. The trench 202 may have the minimum value of the first relative refractive index difference 'Δ1' at a radius range of 13 μm to 15 μm of the optical fiber 100. Further, the minimum value of the first relative refractive index difference 'Δ1' may be optimized at the specified radial distance such that the optical fiber 100 achieves very low micro bending loss and enhanced waveguide properties in compliance with G.657.A2 standard.

In accordance with an embodiment of the present disclosure, a trench volume (i.e., a volume of the trench 202) may be in a range of 14 to 20 percent micrometer square (% μm²). Further, a ratio of the trench volume to a core volume (i.e., a volume of the core 102) may be in a range of 2 to 3.5. The ratio of the trench volume to a core volume may be designed in above specified range to achieve the target optical parameters of the optical fiber 100 along with a reduction in cost of manufacturing of the optical fiber 100.

In accordance with an embodiment of the present disclosure, the optical fiber 100 may exhibit higher bend loss when the thickness, first cladding radius 'R1', trench volume and other parameters of the first cladding 104a is less than the disclosed ranges in the present disclosure. Further, optical fiber 100 may exhibit an increase in cable cutoff wavelength when the thickness, first cladding radius 'R1', trench volume and other parameters of the first cladding 104a is greater than the disclosed ranges in the present disclosure.

In accordance with an embodiment of the present disclosure, the relative refractive index profile of the first cladding may be the alpha profile such that the first cladding refractive index 'n2' derived from the first alpha value 'a1' of the peak shaping parameter 'a'. Particularly, the first alpha value 'a1' of the first cladding 104a may be in a range of 1.5 to 4. Further, the first cladding refractive index 'n2' may be dependent on a minimum refractive index value 'n2$_{min}$' (*i.e.*, a minimum value of the first cladding refractive index 'n2'), the core radius 'Rcore', the first cladding radius 'R1', the first relative refractive index difference 'Δ1', and the radial position 'r' from a center of the optical fiber 100.

In an exemplary aspect of the present disclosure, the first cladding refractive index 'n2' at the radial distance 'r' can be determined as:

$$n2(r) = n2_{min}\left(1 - 2\Delta1\{\frac{(r-R1)}{(Rcore-R1)}\}^{\alpha1}\right)^{1/2}$$

In some aspects of the present disclosure, the second cladding 104b may be undoped. Moreover, the second cladding 104b may have a second relative refractive index difference 'Δ2'. The second relative refractive index difference 'Δ2' may be derived from the second cladding refractive index 'n3'.

In an exemplary example of the present disclosure, the second relative refractive index difference 'Δ2' can be determined as:

$$\Delta2 = (n3 - n_{silica}) *100\ (\%),$$

where n$_{silica}$ is the refractive index of pure silica.

In some alternative of the present disclosure, the second relative refractive index difference 'Δ2' may be zero. Yet in some other alternative embodiment, the second relative refractive index difference 'Δ2' may be in a range of -0.01% to +0.01%.

In an exemplary aspect of the present disclosure, the optical fiber 100 may have the core radius 'Rcore' equal to 5.5 μm, the core relative refractive index difference 'Δcore' equal to 0.62%, the first cladding radius 'R1' equal to 16.1 μm, the first relative refractive index difference (i.e., trench relative refractive index difference) 'Δ1' equal to - 0.18%, the second cladding radius 'R2' equal to 62.5 μm, the second relative refractive index difference 'Δ2' equal to zero, the core volume equal to 5.8 % μm², the trench volume equal to 14.01 % μm², the mode field diameter equal to 8.39 μm, the cut-off wavelength equal to 1239 nm, a zero dispersion wavelength equal to 1308 nm, a macro bend loss equal to 0.081 dB/turn at the bend radius of 7.5 mm and the wavelength of 1550 nm, a macro bend loss equal to 0.285 dB/turn at the bend radius of 7.5 mm and the wavelength of 1625 nm, and an attenuation of 0.194 at the wavelength of 1550 nm.

In another exemplary aspect of the present disclosure, the optical fiber 100 may have the core radius 'Rcore' equal to 5.3 μm, the core relative refractive index difference 'Δcore' equal to 0.59%, the first cladding radius 'R1' equal to 16.2 μm, the first relative refractive index difference 'Δ1' equal to -0.25%, the second cladding radius 'R2' equal to 62.5 μm, the second relative refractive index difference 'Δ2' equal to zero, the core volume equal to 5.6 % μm², the trench volume equal to 16.15 % μm², the mode field diameter equal to 8.62 μm, the cut-off wavelength equal to 1217 nm, the zero dispersion wavelength equal to 1307 nm, the macro bend loss equal to 0.132 dB/turn at the bend radius of 7.5 mm and the wavelength of 1550 nm, the macro bend loss equal to 0.357 dB/turn at the bend radius of 7.5 mm and the wavelength of 1625 nm, and an attenuation of 0.190 at the wavelength of 1550 nm.

In yet another exemplary aspect of the present disclosure, the optical fiber 100 may have the core radius 'Rcore' equal to 4.8 μm, the core relative refractive index difference 'Δcore' equal to 0.62%, the first cladding radius 'R1' equal to 16.3 μm, the first relative refractive index difference 'Δ1' equal to -0.19%, the second cladding radius 'R2' equal to 40 μm, the second relative refractive index difference 'Δ2' equal to zero, the core volume equal to 4.8 % μm², the trench volume equal to 17.3 % μm², the mode field diameter equal to 8.43 μm, the cut-off wavelength equal to 1245 nm, the zero dispersion wavelength equal to 1308 nm, a macro bend loss equal to 0.091 dB/turn at the bend radius of 7.5 mm and the wavelength of 1550 nm, a macro bend loss equal to 0.184 dB/turn at the bend radius of 7.5 mm and the wavelength of 1625 nm, and an attenuation of 0.194 at the wavelength of 1550 nm.

In yet another exemplary aspect of the present disclosure, the optical fiber 100 may have the core radius 'Rcore' equal to 4.9 μm, the core relative refractive index difference 'Δcore' equal to 0.63%, the first cladding radius 'R1' equal to 15.9 μm, the first relative refractive index difference 'Δ1' equal to -0.2%, the second cladding radius 'R2' equal to 50 μm, the second relative refractive index difference 'Δ2' equal to zero, the core volume equal to 5.1 % μm², the trench volume equal to 14.9 % μm², the mode field diameter equal to 8.45 μm, the cut-off wavelength equal to 1202 nm, the zero dispersion wavelength equal to 1311 nm, a macro bend loss equal to 0.135 dB/turn at the wavelength of 1550 nm, a macro bend loss equal to 0.402 dB/turn at the wavelength of 1625 nm, and an attenuation of 0.196 at the wavelength of 1550 nm.

In yet another exemplary aspect of the present disclosure, the optical fiber 100 may have a maximum value of the core radius 'Rcore' equal to 5.5 $\mu$m, a maximum value of the core relative refractive index difference '$\Delta$core' equal to 0.65%, a maximum value of the first cladding radius 'R1' equal to 17 $\mu$m, a maximum value of the first relative refractive index difference '$\Delta$1' equal to -0.25%, a maximum value of the second cladding radius 'R2' equal to 62.5 $\mu$m, a maximum value of the second relative refractive index difference '$\Delta$2' equal to 0.01, a maximum value of the core volume equal to 5.8 % $\mu$m$^2$, a maximum value of the trench volume equal to 20 % $\mu$m$^2$, a maximum value of the mode field diameter equal to 9 $\mu$m, a maximum value of the cut-off wavelength less than 1260 nm, a maximum value of the zero dispersion wavelength equal to 1324 nm, a maximum value of a macro bend loss equal to 0.2 dB/turn at the wavelength of 1550 nm, a maximum value of a macro bend loss equal to 0.5 dB/turn at the wavelength of 1625 nm, and a maximum value of an attenuation of 0.20 at the wavelength of 1550 nm.

In yet another exemplary aspect of the present disclosure, the optical fiber 100 may have a minimum value of the core radius 'Rcore' equal to 4.5 $\mu$m, a minimum value of the core relative refractive index difference '$\Delta$core' equal to 0.55%, a minimum value of the first cladding radius 'R1' equal to 15 $\mu$m, a minimum value of the first relative refractive index difference '$\Delta$1' equal to -0.15%, a minimum value of the second cladding radius 'R2' equal to 40 $\mu$m, a minimum value of the second relative refractive index difference '$\Delta$2' equal to -0.01, a minimum value of the core volume equal to 4.8 % $\mu$m$^2$, a minimum value of the trench volume equal to 14 % $\mu$m$^2$, a minimum value of the mode field diameter equal to 8.2 $\mu$m, and a minimum value of the zero dispersion wavelength equal to 1300 nm.

Fig. 3 is a pictorial snapshot illustrating aa graph representing a comparison of micro-bending loss with respect to wavelength of the optical fiber with G.657.A2 (prior art) in accordance with an embodiment of the present disclosure.X-axis of the graph 300 represents values of wavelength (in nm) and a Y-axis of the graph 300 illustrates micro bending loss (in dB/Km). The variation in value of the micro bending loss of general G.657.A2 optical fiber (prior art) with respect to change in the wavelength is represented as 302. Further, the variation in the value of the micro bending loss of optical fiber 100 with respect to change in the wavelength is represented as 304. From the graph 300, it is evident that the micro bending loss of the optical fiber 100 is less than the micro bending loss of general G.657.A2 optical fiber (prior art).

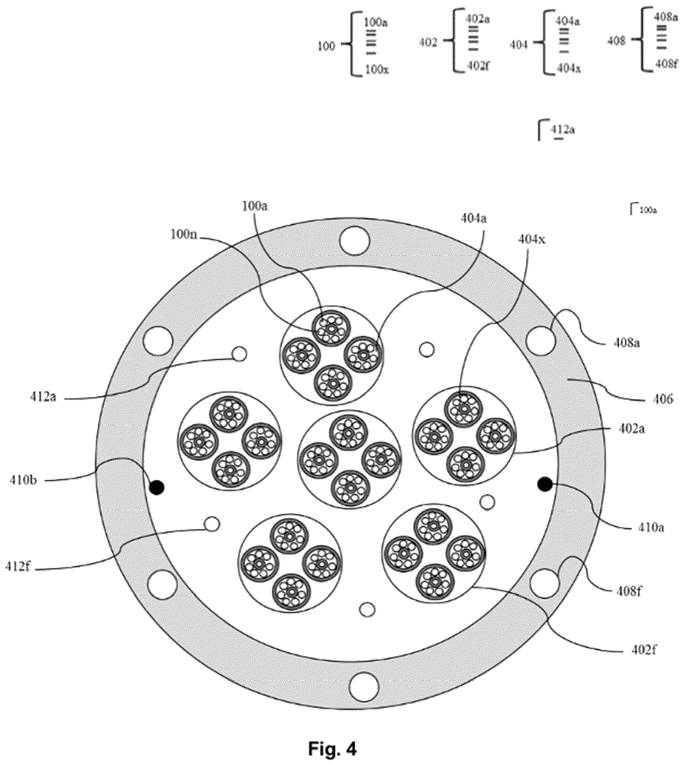

Fig.4 is a pictorial snapshot illustrating an optical fiber cable in accordance with an embodiment of the present disclosure. The plurality of buffer tubes 402 has twenty-four IBRs (i.e., first through twenty fourth IBRs 404a-404x), it will be apparent to a person skilled in the art that the scope of the present disclosure is not limited to it. The plurality of buffer tubes 402 may have any number of IBRs, without deviating from the scope of the present disclosure. Each IBR of the plurality of IBRs 404 may be structurally and functionally similar to the first through twenty-four IBRs 404a-404x as described herein. Further, each buffer tube of the plurality of buffer tubes 402 has four IBRs (for example the first buffer tube 402a is shown to have the first through fourth IBRs 404a-402d), it will be apparent to a person skilled in the art that the scope of the present disclosure is not limited to it. Subsequently, each buffer tube of the plurality of buffer tubes 402 may have any number of IBRs, without deviating from the scope of the present disclosure. In such a scenario, each IBR of the plurality of IBRs 404 may be structurally and functionally similar to the first through twenty fourth IBRs 404a-404x as described herein.

In accordance with an embodiment of the present disclosure, each IBR of the plurality of IBRs 404 may have a plurality of optical fibers 100. Each optical fiber of the plurality of optical fibers 100 (hereinafter interchangeably referred to and designated as "the optical fiber 100") coated with at least one coating (not shown) that may have the thickness of less than or equal to 65 $\mu$m.

In some aspects of the present disclosure, the diameter of the optical fiber 100 coated by at least one coating may be in the range of 125 $\mu$m to 180 $\mu$m. Alternatively, the diameter of the optical fiber 100 coated by at least one coating may be in the range of 160 $\mu$m to 200 $\mu$m. In yet some other aspects of the present disclosure, the diameter of the optical fiber 100 coated by at least one coating may be less than 250 $\mu$m.

The optical fiber 100 may have the core 102, that may be up doped, cladding 104 surrounding the core 102. In particular, the refractive index profile of the core 102 may be an alpha profile such that the core refractive index 'n1' may be derived from the core alpha value 'ac' corresponding to the peak shaping parameter alpha 'a'. Further, the cladding 104 may have the first cladding 104a defined by the first relative refractive index difference. In some aspects of the present disclosure, the first cladding 104a may be down doped. And, the first cladding 104a may be the continuous region adjacent to the core 102 such that the relative refractive index profile of the first cladding 104a is the alpha profile and the first cladding refractive index 'n2' may be dependent on the first alpha value " of the peak shaping parameter".

In some aspects of the present disclosure, the optical fiber 100 may be independent of the one or more pure silica regions that may be adjacent to the core 102. In particular, the optical fiber 100 may not have any un doped region with a predefined radial thickness between the core 102 and the first cladding 104a. Further, the pure silica region (*i.e.*, buffer clad region) increases the manufacturing cost and makes fiber manufacturing process tedious and time taking. In alternate aspects of the present disclosure, the optical fiber 100 may not comprise any pure silica region or un doped region adjacent to the core 102 to make the manufacturing of optical fiber 100 less complex and achieves the target optical parameters or properties of the optical fiber 100.

In some aspects of the present disclosure, the cladding 104b may further have the second cladding 104b surrounding the first cladding 104a. The second cladding 104b may be defined by the second relative refractive index difference '$\Delta 2$'. In particular, the first relative refractive index difference '$\Delta 1$' may be less than the second relative refractive index difference '$\Delta 2$'. In some aspects of the present disclosure, the second cladding 104b may be un doped having second cladding refractive index 'n3'. Further, the second cladding refractive index 'n3' may be equal to the refractive index of pure silica '$n_{silica}$'.

In accordance with an embodiment of the present disclosure, the optical fiber cable 400 may have a sheath 406 surrounding the plurality of buffer tubes 402. In particular, the sheath 406 may be adapted to act as an outermost covering for the optical fiber cable 400 such that the sheath 406 facilitates in reduction of abrasion and to provide the optical fiber cable 100 with extra protection against external mechanical effects such as crushing, and the like. Further, the sheath 406 may be made up of a material such as, but not limited to, a synthetic plastic material, a natural plastic material, and the like. Aspects of the present disclosure are intended to include and/or otherwise cover any type of material for the sheath 406, known to a person of ordinary skill in the art, without deviating from the scope of the present disclosure.

The sheath 406 may have a plurality of strength members 408 that may be partially or completely embedded in the sheath 406. In particular, the plurality of strength members 408 may be adapted to provide strength to the optical fiber cable 400 that may be required during an installation process of the optical fiber cable 400. Further, the strength members 408 may be adapted to provide majority of structural strength and support to the optical fiber cable 400. Furthermore, the strength members 408 may enhance a tensile strength of the optical fiber cable 400, which is highly desirable during the installation process.

In this exemplary aspect, the plurality of strength members 408 has six strength members (*i.e.*, first through sixth strength members 408a-408f), it will be apparent to a person skilled in the art that plurality of strength members 408 may have any number of strength members without deviating from the scope of the present disclosure. In such a scenario, each strength member of the plurality of strength members 408 may be structurally and functionally similar to the first through sixth strength members 408a-408f as described herein.

In accordance with an embodiment of the present disclosure, the optical fiber cable 400 may have one or more ripcords 410 to facilitate ripping, tearing or opening up of the optical fiber cable 400 to access the plurality of strength members 408 from the sheath 406. Although FIG. 4 illustrates that the one or more ripcords 410 has two ripcords (i.e., first and second ripcords shown as 410a and 410b, respectively), it will be apparent to a person skilled in the art that the one or more ripcords 410 may have any number of ripcords, without deviating from the scope of the present disclosure. In such a scenario, each ripcord of the one or more ripcords 410 may be structurally and functionally similar to the first and second ripcords 410a, 410b as described herein.

In accordance with an embodiment of the present disclosure, the optical fiber cable 400 may have a plurality of water swellable yarns 412 to provide water resistance to the plurality of optical fibers 100 inside the optical fiber cable 400 by restricting penetration of water inside the optical fiber cable 400. The plurality WSYs 412 has five WSYs (*i.e.*, first through fifth WSYs 412a-412e), it will be apparent to a person skilled in the art that the plurality WSYs 412 may have any number of WSYs, without deviating from the scope of the present disclosure. In such a scenario, each WSY of the plurality WSYs 412 may be structurally and functionally similar to the first through fifth WSY 412a-412e as described herein.

In accordance with an embodiment of the present disclosure, the optical fiber 100 comprising a core 102, where the core 102 is up doped; and a cladding 104 that surrounds the core 102, and comprising a first cladding 104a that is defined by a first relative refractive index difference ($\Delta 1$) and a second cladding 104b that surrounds the first cladding (104a). In particular, the second cladding 104b is defined by a second relative refractive index difference ($\Delta 2$). Moreover, the first relative refractive index difference ($\Delta 1$) is less than the second relative refractive index difference ($\Delta 2$), where a mode field diameter of the optical fiber (100) is in a range of 8.2 micrometer ($\mu$m) to 9.0 $\mu$m at a wavelength of 1310 nanometer (nm), and a cable cut-off wavelength of the optical fiber 100 is less than or equal to 1260 nm.

In accordance with an embodiment of the present invention, the alpha-profile cladding (104a) without a buffer region, allowing for a more straightforward and cost-effective manufacturing process. The alpha profile, along with specific parameters such as alpha value ($\alpha 1$), trench volume, and thickness, ensures a mode field diameter (MFD) in the desired range and low bend losses.

In accordance with an embodiment of the present invention, the absence of a buffer region and the incorporation of an alpha profile contribute to the overall cost-effectiveness and efficiency of the optical fiber, making it an ideal solution for high-density optical fiber networks.

The key features that directly address the identified problem has the alpha-profile cladding (104a) without a buffer region, optimized parameters like alpha value ($\alpha 1$), suppressed region (202), trench volume, and thickness. These features collectively contribute to achieving the desired mode field diameter (MFD) and low bend losses, resolving the challenges posed by existing solutions. The absence of a buffer region streamlines the manufacturing process, making it less tedious and more cost-effective.

Claim 1 presents a set of interconnected features in the optical fiber, working synergistically to offer a distinct and effective solution. The up-doped core ensures signal integrity, while the continuous first cladding with an alpha profile streamlines the structure, eliminating the need for a buffer region. This streamlined design not only simplifies the manufacturing process but also reduces costs and overall diameter. The specific parameters outlined in the claim, such as the alpha profile and absence of a buffer region, collectively contribute to a mode field diameter (MFD) ranging from 8.2 $\mu$m to 9.0 $\mu$m at 1310 nm wavelength and a cable cut-off wavelength of 1260 nm or less. This integration of features addresses challenges like attenuation, micro-bending losses, and manufacturing complexities, presenting an effective solution for high-speed optical fiber communication with optimized optical properties and reduced bend losses.

The optical fiber finds practical application in optical fiber cables, especially in high-density networks where space optimization is crucial. The design ensures low macro and micro bend losses, making it suitable for scenarios requiring tight bending radii. Whether used in primary coatings, secondary coatings, or colored coatings, our optical fiber demonstrates superior performance in terms of attenuation and bend losses across various wavelengths, meeting the demands of real-world applications.

The alpha-profile cladding without a buffer region, contributing to cost-effective manufacturing and efficient optical performance.

Different aspects encompass the elimination of manufacturing complexities associated with buffer regions and the introduction of optimized parameters, resulting in an optical fiber that excels in terms of mode field diameter (MFD), bend losses, and attenuation across a range of wavelengths.

The optical fiber design not only reduces manufacturing complexities but also delivers key advantages such as a reduced glass diameter, low macro and micro bend losses, and enhanced attenuation performance at various wavelengths. The optical fiber is cost-effective, easily manufacturable, and high-performance optical fiber.

Advantageously, the optical fiber 100 and the optical fiber cable 400 of the present disclosure provides ultra-low bend losses as well as optimized mode field diameter (MFD) values which complies with the G.657.A2 recommendations and even improved optical properties as compared to the G.657.A2 recommendations. Further, the refractive index profile of the optical fiber 100 has been modified in such a way that it becomes ultra-bend sensitive and shows highly improved micro-bending loss. Furthermore, the refractive index profile includes exactly one trench 202 that is adjacent and continuous to the core 102. The optical fiber 100 is independent of any buffer cladding (i.e., pure silica region) adjacent to the core 102. Furthermore, the optical fiber cable 400 has low microbending losses due to a single trench 202 with down doping that is present in each optical fiber 100.

The foregoing descriptions of specific embodiments of the present technology have been presented for purposes of illustration and description. They are not intended to be exhaustive or to limit the present technology to the precise forms disclosed, and obviously many modifications and variations are possible in light of the above teaching. The embodiments were chosen and described in order to best explain the principles of the present technology and its practical application, to thereby enable others skilled in the art to best utilize the present technology and various embodiments with various modifications as are suited to the particular use contemplated. It is understood that various omissions and substitutions of equivalents are contemplated as circumstance may suggest or render expedient, but such are intended to cover the application or implementation without departing from the spirit or scope of the claims of the present technology.

In a case that no conflict occurs, the embodiments in the present disclosure and the features in the embodiments may be mutually combined. The foregoing descriptions are merely specific implementations of the present disclosure, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure shall be subject to the protection scope of the claims.

**Claims**

1. An optical fiber (100) **characterized in that**:

    a core (102), wherein the core (102) is up doped; and
    a cladding (104) that surrounds the core (102), and comprising a first cladding (104a) that is defined by a first relative refractive index difference (Δ1), wherein the first cladding (104a) is a continuous region adjacent to the core (102) such that a relative refractive index profile of the first cladding (104a) is an alpha profile, wherein the continuous region is defined as a region not having one or more pure silica region between the core (102) and the first cladding (104a),

    wherein a mode field diameter of the optical fiber (100) is in a range of 8.2 micrometer ($\mu$m) to 9.0 $\mu$m at a wavelength of 1310 nanometer (nm), and a cable cut-off wavelength of the optical fiber (100) is less than or equal to 1260 nm.

2. The optical fiber (100) as claimed in claim 1, wherein a first alpha value () of the first cladding (100) is in a range of 1.5 to 4.

3. The optical fiber (100) as claimed in claim 1, wherein the first cladding (104a) comprises a suppressed region (202) having a minimum relative refractive index difference at a radius in a range of 13 $\mu$m to 15 $\mu$m.

4. The optical fiber (100) as claimed in claim 1, wherein the first cladding (104a) comprises a trench (202), where the trench (202) has a trench volume in a range of 14 to 20 percent micrometer square (% $\mu$m$^2$).

5. The optical fiber (100) as claimed in claim 4, wherein a ratio of the trench volume to a core volume of the core (202) is in a range of 2 to 3.5.

6. The optical fiber (100) as claimed in claim 1, wherein a thickness of the first cladding (104a) is in a range of 12 $\mu$m to 14 $\mu$m.

7. The optical fiber (100) as claimed in claim 1, wherein the cladding (104) further comprising a second cladding (104b) that surrounds the first cladding (104a), and is defined by a second relative refractive index difference ($\Delta$2), where the first relative refractive index difference ($\Delta$1) is less than the second relative refractive index difference ($\Delta$2).

8. The optical fiber (100) as claimed in claim 1, wherein a first relative refractive index difference ($\Delta$1) of the first cladding (104a) is in a range of -0.15% to -0.25%.

9. The optical fiber (100) as claimed in claim 1, wherein the optical fiber (100) is coated with at least one of, (i) a primary coating that surrounds the cladding (104), a secondary coating that surrounds the primary coating, and a colored coating that surrounds the secondary coating, (ii) a primary coating that surrounds the cladding (104), and a secondary-colored coating that surrounds the primary coating, and (iii) a primary-colored coating that surrounds the cladding (104).

10. The optical fiber (100) as claimed in claim 1, wherein a glass diameter of the optical fiber (100) is in a range of 80 $\mu$m 125 $\mu$m.

11. The optical fiber (100) as claimed in claim 1, wherein the optical fiber (100) has at least one of,

   (i) a micro bend loss of less than 0.5 decibel per kilometer (dB/Km) at a wavelength of 1550 nm,
   (ii) an attenuation of less than or equal to 0.35 dB/Km at a wavelength of 1310 nm,
   (iii) an attenuation of less than or equal to 0.35 dB/Km at a wavelength of 1383 nm,
   (iv) an attenuation of less than or equal to 0.2 dB/Km at a wavelength of 1550 nm, and (v) an attenuation of less than or equal to 0.23 dB/Km at a wavelength of 1625 nm.

12. The optical fiber (100) as claimed in claim 1, wherein the macro bend loss of the optical fiber is

   (i) 0.2 dB/turn at a bend radius of 7.5 mm and a wavelength of 1550 nm, and
   (ii) 0.5 dB/turn at a bend radius of 7.5 mm and a wavelength of 1625 nm.

13. An optical fiber cable (400) **characterized in that**:

   a plurality of optical fiber ribbons (404) twisted spirally, wherein each optical fiber ribbon of the plurality of optical fiber ribbons (404) comprising a plurality of optical fibers (100) such that each optical fiber of the plurality of optical fibers (100) comprising:

   a core (102), wherein the core (102) is up-doped; and
   a cladding (104) that surrounds the core (102), and comprising a first cladding (104a) that is defined by a first relative refractive index difference ($\Delta$1), wherein the first cladding (104a) is a continuous region adjacent to the core (102) such that a relative refractive index profile of the first cladding (104a) is an alpha profile; and

   wherein, a mode field diameter of the optical fiber (100) is in a range of 8.2 micrometer ($\mu$m) to 9.0 $\mu$m at a wavelength of 1310 nanometer (nm), and a cable cut-off wavelength of the optical fiber (100) is less than or equal to 1260 nm.

14. The optical fiber cable (400) as claimed in claim 14, wherein an attenuation of the optical fiber cable (400) is less than 0.25 dB/km at a wavelength of 1550 nm.

15. An optical fiber (100) **characterized in that**:

a core (102), wherein the core (102) is up doped; and
a cladding (104) that surrounds the core (102), and comprising a first cladding (104a) that is defined by a first relative refractive index difference ($\Delta$1) and a second cladding (104b) that surrounds the first cladding (104a), wherein the second cladding (104b) is defined by a second relative refractive index difference ($\Delta$2), wherein the first relative refractive index difference ($\Delta$1) is less than the second relative refractive index difference ($\Delta$2), wherein a mode field diameter of the optical fiber (100) is in a range of 8.2 micrometer ($\mu$m) to 9.0 $\mu$m at a wavelength of 1310 nanometer (nm), and a cable cut-off wavelength of the optical fiber (100) is less than or equal to 1260 nm.

**FIG. 1**

**FIG. 2**

**FIG. 3**

Fig. 4

Europäisches
Patentamt
European
Patent Office
Office européen
des brevets

# EUROPEAN SEARCH REPORT

**Application Number**

EP 24 18 3566

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/136405 A1 (BOOKBINDER DANA CRAIG [US] ET AL) 30 May 2013 (2013-05-30) * paragraphs [0003], [0036], [0039] - [0040], [0052] - [0053], [0057], [0066] - [0067]; figure 4; tables 1,2,3 * | 1-15 | INV. G02B6/036 |
| X | US 2013/136408 A1 (BOOKBINDER DANA CRAIG [US] ET AL) 30 May 2013 (2013-05-30) * paragraphs [0037], [0040], [0055] - [0056], [0060], [0069] - [0070]; figure 4; tables 1,2,3 * | 1-12,15 | |
| X | US 2022/003922 A1 (MUNIGE SRINIVAS [IN] ET AL) 6 January 2022 (2022-01-06) * paragraphs [0007] - [0011], [0023], [0029], [0035], [0037] - [0038], [0046] - [0047]; claims 1,2,6; figure 3 * | 1,2, 7-12,15 | |
| X | US 2022/003923 A1 (MUNIGE SRINIVAS [IN] ET AL) 6 January 2022 (2022-01-06) * paragraphs [0037], [0031] - [0034], [0038] - [0039], [0042] - [0044], [0046] - [0047]; claims 1,7-8,10; figure 3 * | 1,3, 7-12,15 | TECHNICAL FIELDS SEARCHED (IPC) G02B |
| A | US 2011/188826 A1 (SILLARD PIERRE [FR] ET AL) 4 August 2011 (2011-08-04) * paragraphs [0111], [0133] * | 9,13 | |

The present search report has been drawn up for all claims

| Place of search | Date of completion of the search | Examiner |
|---|---|---|
| The Hague | 21 October 2024 | Pantelakis, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 3566

This annex lists the patent family members relating to the patent documents cited in the above-mentioned European search report.
The members are as contained in the European Patent Office EDP file on
The European Patent Office is in no way liable for these particulars which are merely given for the purpose of information.

21-10-2024

| Patent document cited in search report | | Publication date | Patent family member(s) | | Publication date |
|---|---|---|---|---|---|
| US 2013136405 | A1 | 30-05-2013 | BR | 112014013128 A2 | 13-06-2017 |
| | | | CN | 104254793 A | 31-12-2014 |
| | | | DK | 2786185 T3 | 26-09-2016 |
| | | | EP | 2786185 A1 | 08-10-2014 |
| | | | JP | 6218744 B2 | 25-10-2017 |
| | | | JP | 2015503122 A | 29-01-2015 |
| | | | KR | 20140097338 A | 06-08-2014 |
| | | | RU | 2014126430 A | 27-01-2016 |
| | | | US | 2013136405 A1 | 30-05-2013 |
| | | | US | 2013136407 A1 | 30-05-2013 |
| | | | WO | 2013082217 A1 | 06-06-2013 |
| US 2013136408 | A1 | 30-05-2013 | BR | 112014012969 A2 | 13-06-2017 |
| | | | CN | 104169761 A | 26-11-2014 |
| | | | DK | 2786186 T3 | 10-07-2017 |
| | | | EP | 2786186 A1 | 08-10-2014 |
| | | | JP | 6218745 B2 | 25-10-2017 |
| | | | JP | 2015503123 A | 29-01-2015 |
| | | | KR | 20140097337 A | 06-08-2014 |
| | | | RU | 2014126419 A | 27-01-2016 |
| | | | US | 2013136408 A1 | 30-05-2013 |
| | | | WO | 2013082218 A1 | 06-06-2013 |
| US 2022003922 | A1 | 06-01-2022 | EP | 3933468 A1 | 05-01-2022 |
| | | | US | 2022003922 A1 | 06-01-2022 |
| US 2022003923 | A1 | 06-01-2022 | EP | 3933467 A1 | 05-01-2022 |
| | | | US | 2022003923 A1 | 06-01-2022 |
| US 2011188826 | A1 | 04-08-2011 | CN | 102141649 A | 03-08-2011 |
| | | | DK | 2352047 T3 | 11-11-2019 |
| | | | EP | 2352047 A1 | 03-08-2011 |
| | | | JP | 5616245 B2 | 29-10-2014 |
| | | | JP | 2011170348 A | 01-09-2011 |
| | | | US | 2011188826 A1 | 04-08-2011 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202311043713
- WO 2023009103 A1
- US 1150683582 B
- US 11506835 B2